# EUROPÄISCHE PATENTSCHRIFT

(11) **EP 2 505 447 B1**
(45) Veröffentlichungstag und Bekanntmachung des Hinweises auf die Patenterteilung: **06.04.2016**
(21) Anmeldenummer: 12150714.9
(22) Anmeldetag: 11.01.2012
(51) Int. Cl.: B60W 30/18, F16H 61/4043, B60K 23/02, B60W 10/02, F16H 47/04, B60W 50/00

(54) **Fahrzeug mit Anfahrkupplung**
Vehicle with starting clutch
Véhicule doté d'un embrayage de démarrage

(30) Priorität: 29.03.2011 DE 102011001622
(43) Veröffentlichungstag der Anmeldung: 03.10.2012
(73) Patentinhaber: Claas Industrietechnik, 33106 Paderborn (DE)
(72) Erfinder: Mörsch, Claus, 33449 Langenberg (DE)

(56) Entgegenhaltungen:
- EP-A2- 0 943 478
- FR-A1- 2 942 608
- US-A1- 2003 221 881
- US-A1- 2010 179 738

## Beschreibung

Die Erfindung betrifft ein Verfahren zur Einstellung eines Kupplungsmoments einer automatisierten Anfahrkupplung eines Fahrzeuges nach dem Oberbegriff des Anspruchs 1.

Aus der EP 1 886 890 ist ein gattungsgemäßes Verfahren bekannt geworden, bei dem die Anpassung eines Kupplungsmomentes einer automatisierten Anfahrkupplung in Abhängigkeit von verschiedensten Maschinenparametern und der Fahrpedalstellung vorgenommen wird. Das offenbarte Verfahren berücksichtigt unter anderem die von dem Fahrzeug zu überwindende Steigung sowie die zuladungsabhängige Fahrzeugmasse mit dem Ziel, das Fahrzeugverhalten insbesondere beim Anfahren weitgehend von fahrzeug- und fahrbahnbedingten Einflüssen zu entkoppeln. Dies hätte den Effekt, dass das Fahrzeug auch bei unterschiedlichsten Betriebsbedingungen ein weitgehend gleiches Fahrzeugverhalten erzielt und vor allem beim Anfahren an Steigungen nicht zurückrollt. Nach der EP 1 886 890 wird dies dadurch erreicht, dass die Grundposition der Anfahrkupplung so eingestellt wird, dass ein vom Antriebsmotor bereitgestelltes Antriebsdrehmoment über die schleifende Anfahrkupplung und die gewählte Getriebeübersetzung gerade ausreicht, um das Fahrzeug ohne einen zusätzlichen Einsatz einer Bremse an einer Steigung zu halten. Für den Betreiber des Fahrzeugs ergibt sich jedoch bei einem derart strukturierten Verfahren das Problem, dass er bei Betätigung des Fahrpedals nicht weiß, zu welchem Zeitpunkt das Fahrzeug sich in Bewegung setzen wird. Dies hat vor allem bei Rangiervorgängen den Nachteil, dass sich im Bewegungsbereich des Fahrzeugs aufhaltende Personen verletzt werden könnten.

Es ist deshalb Aufgabe der Erfindung die beschriebenen Nachteile des Standes der Technik zu vermeiden und insbesondere ein Verfahren und zugehörige Vorrichtung vorzuschlagen, die den Fahrzeugführer in die Lage versetzen, den konkreten Moment des sich In-Bewegung-Setzen des Fahrzeugs abschätzen zu können.

Diese Aufgabe wird erfindungsgemäß durch die kennzeichnenden Merkmale des Anspruchs 1 gelöst.

Indem die Einstellung eines Kupplungsmoments einer automaisierten Anfahrkupplung dadurch bewirkt wird, dass die Anfahrkupplung über die Auslenkung eines Kupplungspedals aktiviert und das In-Bewegung-Setzen des Fahrzeugs durch Überwinden eines Hanghaltemoments der Anfahrkupplung ausgelöst wird und das Überwinden unterschiedlicher Hanghaltemomente der Anfahrkupplung stets bei annährend gleicher Stellung des Kupplungspedals erfolg, wird der Fahrzeugführer in die Lage versetzen, den konkreten Moment des sich In-Bewegung-Setzen des Fahrzeugs unabhängig von der wirkenden Hangabtriebskraft abschätzen zu können.

Damit nach dem Überwinden des Hanghaltemoments das sich in Bewegung setzen des Fahrzeugs feinfühlig gesteuert werden kann, ist in einer vorteilhaften Ausgestaltung der Erfindung vorgesehen, dass das Überwinden des Hanghaltemoments in einem Bereich von bis zu 30 % des insgesamt zurücklegbaren Kupplungspedalwegs, vorzugsweise bei annähernd 10 % des zurücklegbaren Kupplungspedalwegs erfolgt.

In einer weiteren vorteilhaften Ausgestaltung ist vorgesehen, dass Mittel vorhanden sind, die die notwendige Hanghaltekraft des Fahrzeugs und/oder das aus der notwendigen Hanghaltekraft resultierende notwendige Hanghaltemoment sensieren und das zur notwendigen Hanghaltekraft korrespondierende notwendige Hanghaltemoment über Stellmittel als maximales Kupplungsmoment an der Anfahrkupplung eingestellt wird. Dies hat insbesondere den Effekt, dass der Moment des sich in Bewegung Setzens des Fahrzeugs sehr präzise bestimmt werden kann.

Eine sehr zuverlässig arbeitendes Verfahren wird dann erreicht, wenn in einer vorteilhaften Ausgestaltung der Erfindung dem Fahrzeug eine Steuer- und Regeleinrichtung zugeordnet ist, die aus dem ermittelten notwendigen Hanghaltemoment Stellsignale zur Definition eines maximalen Kupplungsmoments der Anfahrkupplung und dessen Koppelung an die Stellung des Kupplungspedals generiert.

Eine konstruktiv zuverlässig arbeitende, einen geringen Bauraum benötigende und vorhandene Baugruppen des Fahrzeugs optimal nutzende technische Umsetzung des Verfahrens wird in einer vorteilhaften Weiterbildung des Verfahrens dann erreicht, wenn die Anfahrkupplung als Hydraulikschaltung ausgebildet ist und zumindest ein Druckbegrenzungsventil und einem diesen zugeordnetes Steuerdruckventil umfasst und wobei das Stellsignal zur Definition eines maximalen Kupplungsmoments in der Anfahrkupplung als Hydraulikdruck definiert ist. Dieser Effekt lässt sich auch dadurch noch erhöhen, wenn das eine stufenlos änderbare Abtriebsdrehzahl bereitstellende Getriebe zumindest einen Hydromodul und wenigstens einen Mechanikmodul umfasst und die Anfahrkupplung dem Hydromodul zugeordnet ist.

In einer weiteren vorteilhaften Ausgestaltung der Erfindung umfasst der Hydromodul zumindest zwei in einem geschlossenen Hydraulikkreislauf angeordnete Hydrostateinheiten, wobei das Druckbegrenzungsventil die pumpenseitigen und verbraucherseitigen Hydraulikzweige des Hydraulikkreislaufes miteinander verbindet, ein dem Druckbegrenzungsventil zugeordnetes Steuerdruckventil mit der Steuer- und Regeleinrichtung datenaustauschbar verbunden ist und jedem Hydraulikzweig ein mit der Steuer- und Regeleinrichtung gekoppelter Drucksensor zugeordnet ist. Ein derartige Struktur hat vorallem den Vorteil, dass die Anfahrkupplung unmittelbar in den Hydromodul integrierbar ist, ohne dass die vorhandenen Getriebestrukturen angepasst werden müssen.

Eine störungsarme, präzise arbeitende und eine zuverlässige Signalverarbeitung sicherstellende Umsetzung des erfindungsgemäßen Verfahrens wird dadurch erreicht, dass
- der dem verbraucherseitigen Hydraulikzweig zugeordnete Drucksensor ein dem Hanghaltemoment proportionales Drucksignal generiert und an die Steuer- und Regeleinrichtung übergibt,
- das ein dem Kupplungspedal zugeordneter Positionssensor ein die Stellung des Kupplungspedals definierendes Positionssignal generiert und an die Steuer- und Regeleinrichtung übergibt,
- das die Steuer- und Regeleinrichtung das dem Hanghaltemoment proportionale Drucksignal und das Positionssignal miteinander verknüpft
- und ein von der Steuer- und Regeleinrichtung generiertes Steuersignal die Ansteuerung des dem Druckbegrenzungsventil zugeordneten Steuerdruckventils und damit die Änderung des Kupplungsmoments bewirkt.

Die Integration einer separater Steuer- und Regeleinrichtung wird in einer vorteilhaften Ausgestaltung der Erfindung dann entbehrlich, wenn die Steuer- und Regeleinrichtung ein dem Fahrzeug zugeordnetes Fahrzeugsteuergerät und/oder ein dem die stufenlos änderbare Abtriebsdrehzahlen bereitstellenden Getriebe zugeordnetes Getriebesteuergerät umfasst.

Eine zuverlässige Generierung von die Position des Kupplungspedals definierenden Positionssignalen wird dann erreicht, wenn in einer vorteilhaften Ausgestaltung der Erfindung der Positionssensor als Drehpotentiometer ausgeführt ist.

Eine praktikable Umsetzung des erfindungsgemäßen Verfahrens wird dann erreicht, wenn in einer weiteren vorteilhaften Ausgestaltung der Erfindung die Ansteuerung des dem Druckbegrenzungsventil zugeordneten Steuerdruckventils durch Betätigung des Kupplungspedals eine Absenkung des Kupplungsmoments in der Weise bewirkt, dass unabhängig vom maximalen Haltemoment das In-Bewegung-Setzen des Fahrzeug stets bei nahezu gleicher Stellung des Kupplungspedals erfolgt.

Eine konstruktiv einfache Umsetzung des erfindungsgemäßen Verfahrens ergibt sich vor allem dann, wenn in der Steuer- und Regeleinrichtung zumindest eine Ventilsteuerkennlinie hinterlegt ist, die den Druck im pumpenseitigen Hydraulikzweig des Hydromoduls in Abhängigkeit von der Stellung des Kupplungspedals in der Weise steuert, dass die zumindest eine hinterlegte Ventilsteuerkennlinie in Abhängigkeit von dem, dem Hanghaltemoment proportionalen Druck im verbraucherseitigen Hydraulikzweig des Hydromoduls in eine angepasste Ventilsteuerkennlinie überführt wird, die sich durch Verschiebung der hinterlegten zumindest einen Ventilsteuerkennlinien in Richtung des ermittelten Drucks im verbraucherseitigen Hydraulikzweig ergibt.

Um sicherzustellen, dass sich das Fahrzeug nach Überwindung des Hanghaltemoments mit konstanter Beschleunigung hangabwärts bewegt ist in einer weiteren vorteilhaften Ausgestaltung der Erfindung vorgesehen, dass das In-Bewegung-Setzen des Fahrzeugs mit nahezu konstanter Beschleunigung erfolgt indem das Hanghaltemoment ermittelt wird und bei kleinem Hanghaltemoment ein schnelles Öffnen des Druckbegrenzungsventils und bei großem Hanghaltemoment ein langsames Öffnen des Druckbegrenzungsventils vorgenommen wird.

Eine große Flexibilität für die Anwendung des erfindungsgemäßen Verfahrens ergibt sich dann, wenn in einer weiteren vorteilhaften Ausgestaltung der Erfindung das eine stufenlos änderbare Abtriebsdrehzahl bereitstellende Getriebe als elektro-mechanisch leistungsverzweigtes Getriebe ausgebildet ist und die Anfahrkupplung als elektrische Schaltung ausgebildet ist, deren das Drehmoment des oder der Elektromotoren bestimmenden Parameter zur Steuerung der Anfahrkupplung änderbar sind.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: ein als Traktor ausgeführtes Fahrzeug mit CVT-Getriebe und automatischer Anfahrkupplung
- Figur 2: eine Detaildarstellung des CVT.Getriebes und der Automatischen Anfahrkupplung nach Figur 1
- Figur 3: eine Detaildarstellung der automatischen Anfahrkupplung nach Figur 2
- Figur 4: eine Detaildarstellung der Signalverarbeitung der erfindungsgemäßen automatischen Anfahrkupplung

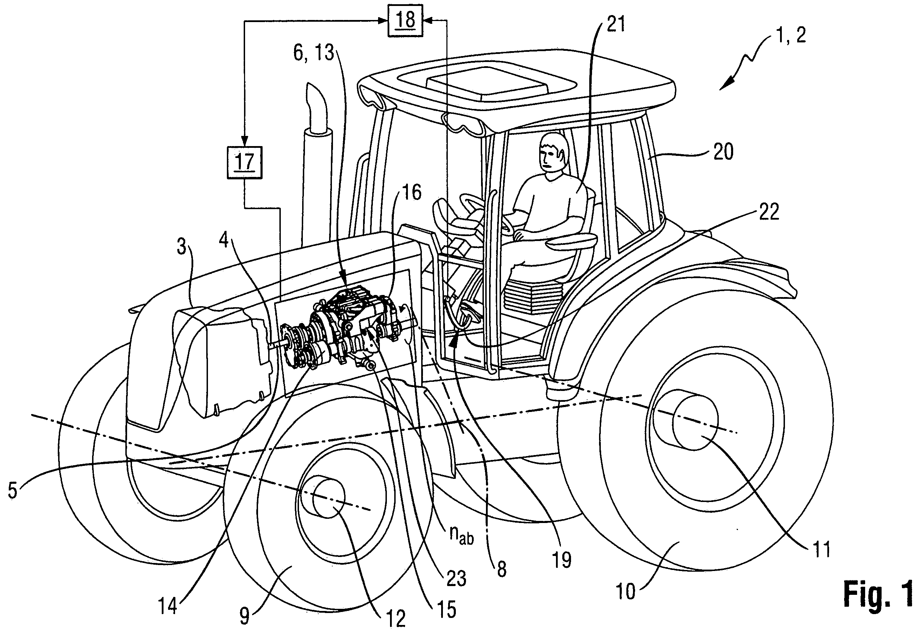

Figur 1 zeigt ein als landwirtschaftliches Nutzfahrzeug 1, hier Traktor, ausgeführtes Fahrzeug 2 mit einem in seinem frontseitigen Bereich angeordneten Verbrennungsmotor 3, dessen Abtriebswelle 4 mit der Eingangswelle 5 einer noch näher zu beschreibenden Hauptgetriebeeinheit 6 gekoppelt ist. Die Abtriebswelle 7 der Hauptgetriebeeinheit 6 ist über einen nur schematisch angedeuteten und an sich bekannten Antriebsstrang 8 mit den Laufrädern 9,10 der Hinterachse 11 und/oder Vorderachse 12 des Traktors 1 verbunden. Die Hauptgetriebeeinheit 6 ist als ein eine stufenlos änderbare Abtriebsdrehzahl n_{ab} bereitstellendes Getriebe, ein sogenanntes hydrostatisch-mechanisch leistungsverzweigtes Getriebe, kurz CVT-Getriebe 13 ausgeführt. Im dargestellten Ausführungsbeispiel umfasst das CVT-Getriebe 13 einen die Eingangswelle 5 aufnehmenden Mechanikmodul 14, ein mit diesem in Wirkverbindung stehenden Hydromodul 15 und eine mit dem Mechanikmodul 14 gekoppelte, die Abtriebswelle 7 aufnehmende Abtriebsstufe 16. Das CVT-Getriebe 13 verfügt zudem über ein Getriebesteuergerät 17 zur Ansteuerung seiner mechanischen und hydraulischen Komponenten. Das Getriebesteuergerät 17 steht drahtlos oder leitungsbasiert in Kommunikationsverbindung mit einem dem Fahrzeug 2 zugeordneten Fahrzeugsteuergerät 18, welches zur Steuerung verschiedenster, hier nicht im Detail beschriebener fahrzeugseitiger Funktionen vorgesehen ist. Erfindungsgemäß und später näher beschrieben umfasst eine dieser Funktionen die Sensierung der momentanen Position 19 eines in der Fahrzeugkabine 20 und im Zugangsbereich eines Fahrzeugführers 21 angeordneten Kupplungspedals 22, welches die noch näher zu beschreibende erfindungsgemäße Ansteuerung einer dem CVT-Getriebe 13 zugeordneten Anfahrkupplung 23 bewirkt.

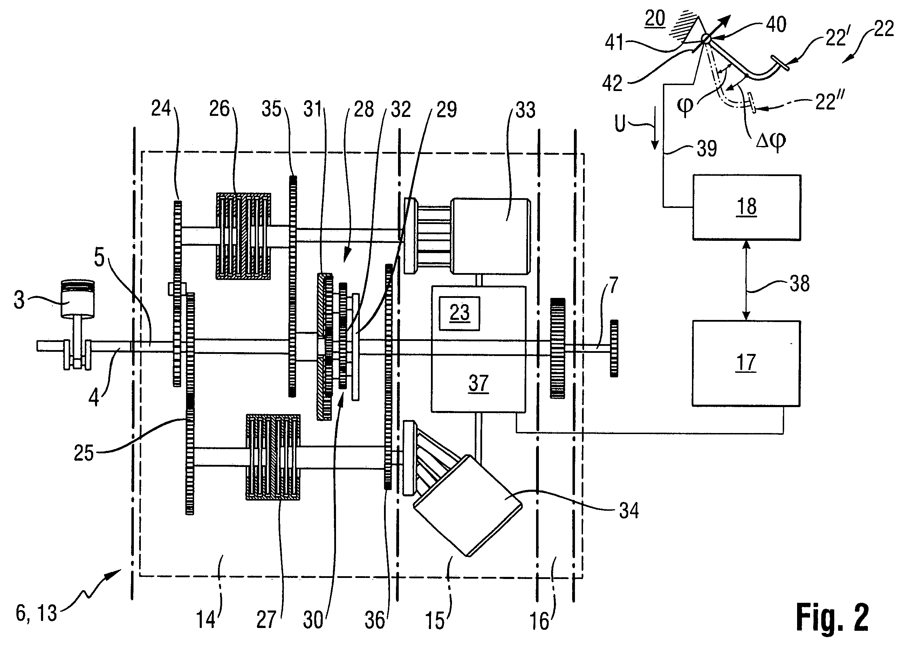

Figur 2 zeigt eine schematische Darstellung der Struktur der als CVT-Getriebe 13 ausgeführten Hauptgetriebeeinheit 6. Der Mechanikmodul 14 umfasst eingangsseitig eine erste und eine zweite Getriebestufe 24, 25 zur Übertragung eines Teils der von dem Verbrennungsmotor 3 bereitgestellten Energie an den Hydromodul 15 des CVT-Getriebes 13. Die erste Getriebestufe 24 ist mit der Vorwärts-Rückwärtsfahrkupplung 26 verbunden während die zweite Getriebestufe 25 mit der sogenannten Fahrbereichskupplung 27, die das Betreiben des CVT-Getriebes 13 zwecks Verbesserung des Wirkungsgrades in zwei Fahrbereichen ermöglicht, verbunden ist. Beide Kupplungen 26, 27 stehen mit einem Planetengetriebe 28 in Wirkverbindung, wobei das Planetenradgetriebe 28 einen von einem Planetensteg 29 getragenen Planetensatz 30, ein mit dem Planetensatz 30 kämmendes Hohlrad 31 und ein mit der Eingangswelle 5 drehfest verbundenes Sonnenrad 32 umfasst. Die dem Hydromodul 15 zugeordneten Hydrostateinheiten 33, 34 greifen jeweils über ihnen zugeordnete Getriebestufen 35, 36 am Hohlrad 31 und am Planetensteg 30 des Planetengetriebes 28 an. Durch Änderung des Schwenkwinkels der Hydrostateinheiten 33, 34 und damit der von diesen geförderten Ölmenge kann neben dem vom Hydromodul 15 bereitstellbaren hydraulischen Moment die Drehzahl des Hohlrades 31 und des Planetensteges 29 und damit die Drehzahl des Planetensatzes 30 variiert werden, sodass die Abtriebsstufe 16 eine variable Abtriebsdrehzahl an den Abtriebswelle 7 des CVT-Getriebes 13 zur Verfügung stellt.

Die Hydrostateinheiten 33, 34 sind über eine in Figur 2 nur schematisch dargestellte, die erfindungsgemäße Anfahrkupplung 23 umfassende Hydraulikschaltung 37 miteinander gekoppelt. Die Hydraulikschaltung 37 mit der ihr zugeordneten Anfahrkupplung 23 steht über das bereits beschriebene Getriebesteuergerät 17 mit dem Fahrzeugsteuergerät 18 in einer Kommunikationsverbindung 38 über die wechselseitig Daten austauschbar sind. Zudem kommuniziert das Kupplungspedal 22 über eine Datenkommunikationsstrecke 39 mit dem Fahrzeugsteuergerät 18. Im dargestellten Ausführungsbeispiel ist das Kupplungspedal 22 über ein Drehgelenk 40 schwenkbeweglich am Rahmen 41 der Fahrzeugkabine 20 angelenkt. Damit nun die jeweilige Position des Kupplungspedals 22', 22" sensiert werden kann, ist dem Drehgelenk 40 des Kupplungspedals 22 im einfachsten Fall ein Drehpotentiometer 42 zugeordnet, dessen positionsabhängig generiertes Spannungssignal U an das Fahrzeugsteuergerät 18 übergeben wird, wobei das Fahrzeugsteuergerät 18 aus diesem Spannungssignal U die konkrete Position des Kupplungspedals 22', 22" in der Weise ableitet, dass der relative Anteil Aϕ eines maximal von dem Kupplungspedal 22 zurücklegbaren Kupplungspedalwegs ϕ bestimmt wird. Damit stehen dem Traktorsteuergerät 18 und dem mit diesem verbundenen Getriebesteuergerät 17 Informationen über die momentane Position des Kupplungspedals 22 zur Verfügung, sodass in erfindungsgemäßer Weise die Steuerung der Anfahrkupplung 23 des CVT-Getriebes 13 an die jeweilige Stellung des Kupplungspedals 22', 22" koppelbar ist.

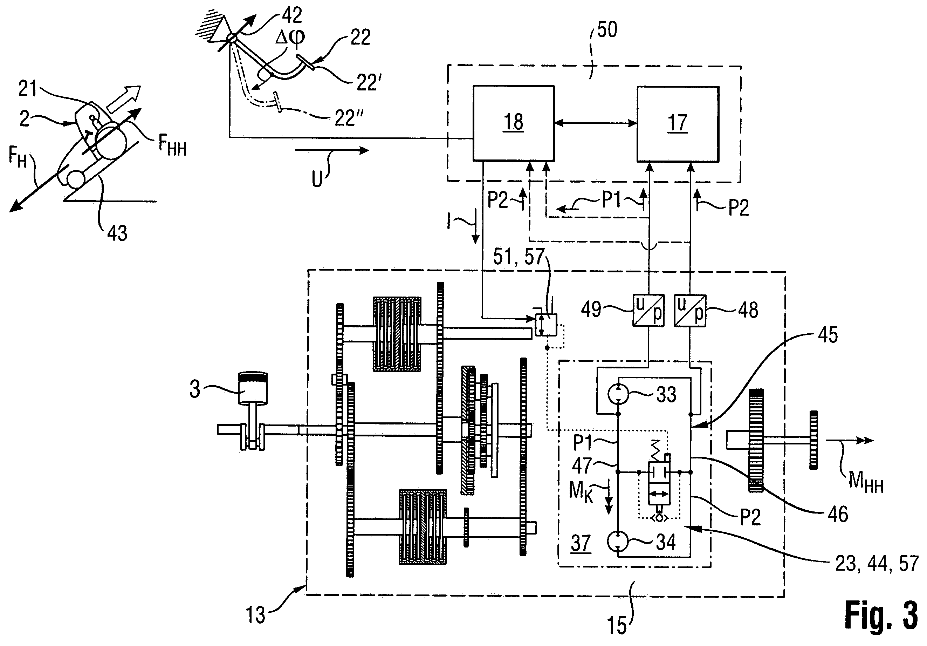

Figur 3 beschreibt nun die Erfindung im Detail. Damit ein an einer Steigung 43 haltendes Fahrzeug 2 aus dem Stand definiert in Wirkrichtung der Hangabtriebskraft F_{H} in Bewegung gesetzt werden kann, bedarf es einer sogenannten Anfahrkupplung 23. In dem dargestellten Ausführungsbeispiel ist die erfindungsgemäße Anfahrkupplung 23 in die dem Hydromodul 15 des CVT-Getriebes 13 zugeordnete Hydraulikschaltung 37 eingebunden und als Druckbegrenzungsventil 44 ausgeführt. In an sich bekannter Weise sind die Hydrostateinheiten 33, 34 des Hydromoduls 15 in einem geschlossenen Hydraulikkreislauf 45 miteinander gekoppelt, wobei der geschlossene Hydraulikkreislauf 45 einen verbraucherseitigen Hydraulikzweig 46 und einen pumpenseitigen Hydraulikzweig 47 umfasst. Die als Druckbegrenzungsventil 44 ausgestaltete Anfahrkupplung 23 verbindet beide Hydraulikzweige 46, 47 miteinander. Zudem ist jedem Hydraulikzweig 46, 47 jeweils ein Drucksensor 48, 49 zugeordnet, sodass sowohl im pumpenseitigen als auch im verbraucherseitigen Hydraulikzweig 46, 47 permanent die dort jeweils anliegenden Drücke gemessen und als Drucksignale P1 und P2 an das Getriebesteuergerät 17 und/oder das Fahrzeugsteuergerät 18 übermittelt werden. Es liegt im Rahmen der Erfindung, dass im Fall der Weiterleitung der Drucksignale P1, P2 an das Fahrzeugsteuergerät 18 dies entweder direkt oder indirekt über das Getriebesteuergerät 17 erfolgen kann. Weiter liegt es im Rahmen der Erfindung, dass das Fahrzeugsteuergerät 18 und das Getriebesteuergerät 17 in einer einzigen Steuer- und Regeleinheit 50 zusammengefasst sein können. Damit das als Anfahrkupplung 23 fungierende Druckbegrenzungsventil 44 in noch näher zu beschreibender Weise angesteuert werden kann, ist diesem ein Steuerdruckventil 51 zugeordnet.

Ein an einer Steigung 43 haltendes Fahrzeug 2 kommt dann nicht unkontrolliert in Bewegung, wenn von dem Fahrzeug 2 selbst eine der Hangabtriebskraft F_{H} entgegen gerichtete Hanghaltekraft F_{HH} erzeugt wird. Üblicherweise wird dies bei Fahrzeugen 2, die über ein hydrostatisch-mechanisch leistungsverzeigtes Getriebe 13 verfügen dadurch bewirkt, dass von dem CVT-Getriebe 13 ein sogenanntes Hanghaltemoment M_{HH} generiert wird, welches proportional zur notwendigen Hanghaltekraft F_{HH} ist. Aufgrund dessen, dass die Hangabtriebskraft F_{H} unter anderem von der Fahrzeugmasse, dem Grad der Steigung 43 und der auftretenden Reibung zwischen den Laufrädern 9, 10 des Fahrzeugs 2 und dem Boden abhängt muss das maximale Kupplungsmoment M_{K} der Anfahrkupplung 23 vorteilhafter Weise so groß sein, dass von dem CVT-Getriebe 13 auch bei ungünstigen äußeren Bedingungen, etwa feuchter Boden und große Steigungen 43, ein sicherer Stillstand des Fahrzeugs 2 gewährleistet wird.

Im dargestellten Ausführungsbeispiel ist der im pumpenseitigen Hydraulikzweig 47 anliegende Druck P1 proportional dem maximalen Kupplungsmoment M_{K} und liegt vorzugsweise bei 500 bar. Der im verbraucherseitigen Hydraulikzweig 46 anliegende Druck P1 ist beim Stehen des Fahrzeugs 2 an einer Steigung 43 annährend proportional dem notwendigen Hanghaltemoment M_{HH} und kann in Abhängigkeit von den äußeren Randbedingungen (Fahrzeugmasse, Steigung, Reibung) bei einem beliebigen Druckwert kleiner 500 bar liegen. Soll nun das Fahrzeug 2 in Bewegung gesetzt werden, tritt der Fahrzeugführer 21 das Kupplungspedal 22. Dabei generiert, wie bereits beschrieben, das Drehpotentiometer 42 ein den zurückgelegten Kupplungspedalweg Δϕ repräsentierendes Spannungssignal U, welches an das Fahrzeugsteuergerät 18 oder eine das Fahrzeugsteuergerät 18 und das Getriebesteuergerät 17 umfassende Steuer- und Regeleinrichtung 50 übergeben. Je nach Beschaffenheit der Steuergeräte 17, 18, 50 wird schließlich entweder unmittelbar im Fahrzeugsteuergerät 18 oder im Getriebesteuergerät 17 oder in der übergeordneten Steuer- und Regeleinrichtung 50 ein Stellsignal I zur Ansteuerung des Steuerdruckventils 51 und dem von ihm angesteuerten, als Anfahrkupplung 23 fungierenden Druckbegrenzungsventil 44 generiert. Die Ansteuerung des Druckbegrenzungsventils 44 führt zu dessen Öffnung, sodass der Druck P1 im pumpenseitigen Hydraulikzweig 47 abgesenkt wird. Fällt der Druck P1 unter den verbraucherseitigen Druck P2 schaltete das Druckbegrenzungsventil 44 von der Sperr- in die Durchlassstellung, sodass beide Hydraulikzweige 46, 47 miteinander verbunden sind. Dies führt zu einem Druckausgleich in beiden Hydraulikzweigen 46, 47. Wird durch weiteres Betätigen des Kupplungspedals 22 der nunmehr in beiden Hydraulikzweigen gleiche Druck weiter abgesenkt, fällt er unter den dem Hanghaltemoment M_{HH} proportionalen Druck P1. Im Ergebnis führt dies dazu, dass sich das Fahrzeug Hangabtriebskraft-bedingt in Bewegung setzt und bergab rollt.

Aufgrund dessen, dass die Hangabtriebskraft F_{H} je nach Randbedingungen unterschiedlich groß ist, beginn das sich in Bewegung setzen des Fahrzeugs 2 stets bei unterschiedlichem, von dem Druckbegrenzungsventil 44 im Hydraulikkreislauf 45 bestimmten Druck. Dies würde aber auch dazu führen, dass der Fahrzeugführer 21 nicht abschätzen kann, wann sich das Fahrzeug 2 tatsächlich in Bewegung setzt, da dies druckabhängig stets bei unterschiedlichen Stellungen des Kupplungspedals 22 erfolgen würde.

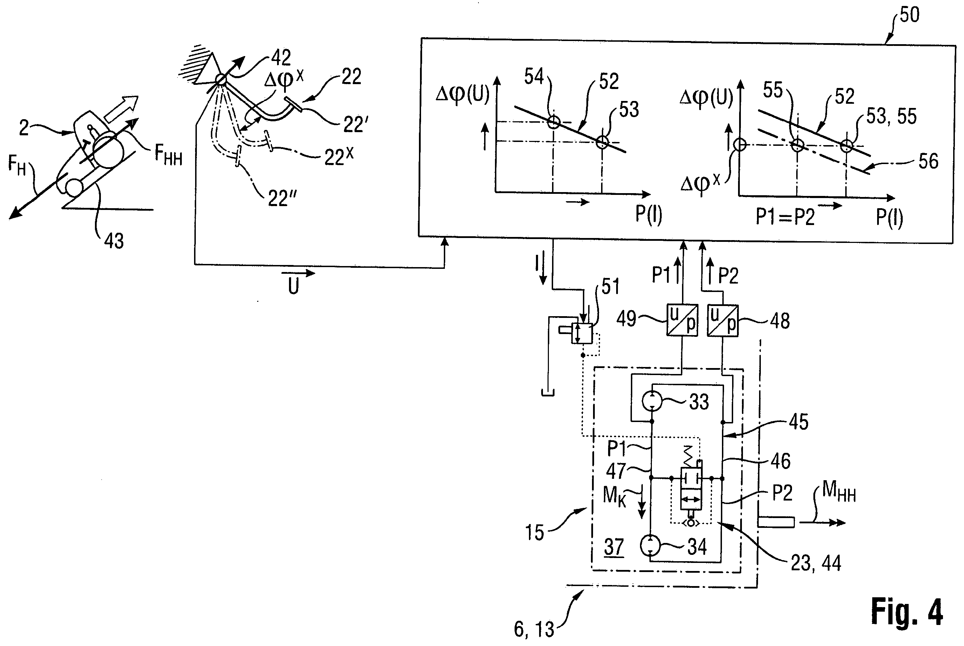

Hier setzt nun die Erfindung an. Gemäß Fig. 4 rollt das Fahrzeug 2 dann in Wirkrichtung der Hangabtriebskraft F_{H}, wenn das von der Anfahrkupplung 23 bereitgestellte Kupplungsmoment M_{K} kleiner als das von der Hauptgetriebeeinheit 6 bereitgestellte, der Hanghaltekraft F_{HH} proportionale Hanghaltemoment M_{HH} ist. Das Kupplungsmoment M_{K} fällt dann unter den Betrag des Hanghaltemoments M_{HH}, sobald der im pumpenseitigen Hydraulikzweig 47 anliegende Druck P1 kleiner als der im verbraucherseitigen Hydraulikzweig 46 anliegende Druck P 2 ist. Nach der Erfindung soll dieser Moment unabhängig von den äußeren Randbedingungen (Fahrzeugmasse, Steigung, Reibung) stets bei annähernd gleicher Kupplungspedalstellung 22^{x} erfolgen, d.h. bei stets annähern dem gleichen vom Kupplungspedal 22 zurückgelegten Kupplungsweg Δϕ^{x}. Im Weiteren wird vereinfacht nur noch auf die bereits beschriebene Steuer- und Regeleinrichtung 50 Bezug genommen, die das Getriebesteuergerät 17 und das Fahrzeugsteuergerät 18 entweder in einer einzigen Einheit oder in getrennten Einheiten umfassen kann. Basierend auf dem an sich bekannten Zusammenhang, dass mit zunehmender Auslenkung eines Drehpotentiometers das von ihm generierte Spannungssignal U zunimmt, sind in der Steuer- und Regeleinheit 50 Ventilsteuerkennlinien 52 hinterlegt, die mit zunehmendem Spannungssignal U, was einer Zunahme des Kupplungspedalwegs Δϕ entspricht, durch Generierung des Stellsignals I eine Reduzierung des Drucks P1 in dem pumpenseitigen Hydraulikzweig 47 des geschlossenen Hydraulikkreislaufs 45 bewirken. In dem Moment, wo der Druck P1 dem im verbraucherseitigen Hydraulikzweig 46 anliegenden Druck P2 entspricht, öffnet die von dem Druckbegrenzungsventil 44 gebildete erfindungsgemäße Anfahrkupplung 23. Je größer die wirkende Hangabtriebskraft F_{H} ist, um so höher sind die Leitungsdrücke P1, P2 und um so geringer ist der von dem Anfahrkupplungspedal 22 zurückgelegte Kupplungspedalweg Δϕ bis zum Öffnen der Anfahrkupplung 23. Die linke in die Steuer- und Regeleinrichtung 50 symbolisch eingezeichnete Darstellung verdeutlicht diesen Zusammenhang bildlich, indem zwei Kupplungsbetätigungspunkte 53, 54 dargestellt sind, wobei die Kupplungsbetätigungspunkte 53, 54 dem Moment entsprechen, indem das jeweilige Hanghaltemoment M_{HH} der Anfahrkupplung 23 überwunden und das Fahrzeug 2 in Bewegung gesetzt wird. Der erste Kupplungsbetätigungspunkt 53 beschreibt das in Bewegung setzen des Fahrzeugs 2 bei höherem Druck P1 und geringerer Auslenkung Δϕ des Kupplungspedals 22, mithin bei einer höheren wirkenden Hangabtriebskraft F_{H} als dies in dem weiteren Betätigungspunkt 54 der Fall ist. Damit sich das Fahrzeug 2 nun stets bei gleicher Stellung des Kupplungspedals 22 in Bewegung setzt, werden gemäß der rechten in die Steuer- und Regeleinrichtung 50 symbolisch eingetragenen Darstellung die hinterlegten Ventilsteuerkennlinien 52 so angepasst, dass die bei unterschiedlichen Druckgleichgewichten P1 = P2 liegenden Kupplungsbetätigungspunkte 55 stets bei annähernd derselben Position des Kupplungspedals 22, d.h. bei stets annährend dem gleichen von dem Kupplungspedal 22 zurückgelegten Kupplungspedalweg Δϕ^{x} liegt. Erreicht wird dieses Betätigungsverhalten des Kupplungspedals 22 dadurch, dass die, einen linearen Zusammenhang zwischen zurückgelegtem Kupplungspedalweg Δϕ und Stellsignal I für das Steuerdruckventil 51 des die Anfahrkupplung 23 bildenden Druckbegrenzungsventils 44 abbildende Ventilsteuerkennlinien 52 in Richtung des im verbraucherseitigen Hydraulikzweig 46 detektierten Druck P2 in dem hinterlegten Kennlinienfeld verschoben wird. Damit ergibt sich jeweils eine angepasste Ventilsteuerkennlinie 56 deren Kupplungsbetätigungspunkt 55 stets bei annähernd gleicher Stellung des Kupplungspedals 22^{x} erreicht wird. Damit wird eine

Damit nach Erreichen des Kupplungsbetätigungspunktes 55 das weitere Öffnen der Anfahrkupplung 23 feinfühlig gesteuert werden kann, ist zudem vorgesehen, dass die erfindungsgemäßen Kupplungsbetätigungspunkte 55 in einem Bereich von bis zu 30 % des insgesamt zurücklegbaren Kupplungspedalwegs ϕ, vorzugsweise bei annähernd 10 % des zurücklegbaren Kupplungspedalwegs ϕ liegen.

Indem das die Anfahrkupplung 23 bildende Druckbegrenzungsventil 44 über das ihm zugeordnete Steuerdruckventil 51 so angesteuert wird, dass unabhängig von der am Fahrzeug 2 angreifenden Hangabtriebskraft F_{H} stets bei annähernd derselben Kupplungspedalstellung 22^{x} das sich in Bewegung setzen des Fahrzeugs 2 beginnt, bilden zumindest das Steuerdruckventil 51 und das Druckbegrenzungsventil 44 die erfindungsgemäßen Stellmittel 57 zur Einstellung des maximalen Kupplungsmoments M_{K}. Zudem bilden die dem verbraucherseitigen und dem pumpenseitigen Hydraulikzweig 46, 47 zugeordneten Drucksensoren 48, 49 einfache Mittel zur indirekten Bestimmung der notwendigen Hanghaltekraft, die proportional zu dem von der Hauptgetriebeeinheit 6 aufzubringenden Hanghaltemoment M_{HH} und damit zugleich proportional zu dem im verbraucherseitigen Hydraulikzweig anliegenden Druck P2 ist. Damit ist die dem Fahrzeug 2 zugeordnete Steuer- und Regeleinrichtung 50 in der Lage, aus dem, dem notwendigen Hanghaltemoment M_{HH} proportionalen, im verbraucherseitigen Hydraulikzweig 46 ermittelten Druck P2 ein Stellsignale I zur Definition eines maximalen Kupplungsmoments M_{K} der Anfahrkupplung 23 und dessen Koppelung an die Stellung des Kupplungspedals 22 zu generieren.

Fällt der Druck P1 im pumpenseitigen Hydraulikzweig 47 unter den Druck P2 im verbraucherseitigen Hydraulikzweig 46 setzt sich das Fahrzeug 2 in Wirkungsrichtung der Hangabtriebskraft FH in Bewegung. Um sicherzustellen, dass sich das Fahrzeug 2 nach Erreichen dieser Grenze mit konstanter Beschleunigung hangabwärts bewegt ist in einer weiteren vorteilhaften Ausgestaltung vorgesehen, dass das In-Bewegung-Setzen des Fahrzeugs 2 mit nahezu konstanter Beschleunigung dadurch bewirkt wird, dass das Hanghaltemoment M_{HH} ermittelt und bei kleinem Hanghaltemoment MHH ein schnelles Öffnen des Druckbegrenzungsventils 44 und bei großem Hanghaltemoment M_{HH} ein langsames Öffnen des Druckbegrenzungsventils 44 vorgenommen wird.

Weiter liegt es im Rahmen der Erfindung, dass das eine stufenlos änderbare Abtriebsdrehzahl bereitstellende Getriebe 6 als elektro-mechanisch leistungsverzweigtes Getriebe ausgebildet ist und die Anfahrkupplung 23 als elektrische Schaltung ausgebildet ist, deren das Drehmoment des oder der Elektromotoren bestimmenden Parameter zur Steuerung der Anfahrkupplung änderbar sind.

**Bezugszeichenliste:**

| | | | |
|---|---|---|---|
| 1 | Nutzfahrzeug, Traktor | 31 | Hohlrad |
| 2 | Fahrzeug | 32 | Sonnenrad |
| 3 | Verbrennungsmotor | 33, 34 | Hydrostateinheiten |
| 4 | Antriebswelle | 35, 36 | Getriebestufe |
| 5 | Eingangswelle | 37 | Hydraulikschaltung |
| 6 | Hauptgetriebeeinheit | 38 | Kommunikationsverbindung |
| 7 | Abtriebswelle | 39 | Datenkommunikationsstrecke |
| 8 | Antriebsstrang | 40 | Drehgelenk |
| 9 | Laufräder | 41 | Rahmen der Fahrzeugkabine |
| 10 | Laufräder | 42 | Drehpotentiometer |
| 11 | Hinterachse | 43 | Steigerung |
| 12 | Vorderachse | 44 | Druckbegrenzungsventil |
| 13 | CVT-Getriebe | 45 | Hydraulikkreislauf |
| 14 | Mechanikmodul | 46, 47 | Hydraulikzweig |
| 15 | Hydromodul | 48, 49 | Drucksensor |
| 16 | Abtriebsstufe | 50 | Steuer- und Regeleinheit |
| 17 | Getriebesteuergerät | 51 | Steuerdruckventil |
| 18 | Fahrzeugsteuergerät | 52 | Ventilsteuerkennlinien |
| 19 | Momentane Position | 53, 54 | Kupplungsbetätigungspunkt |
| 20 | Fahrzeugkabine | 55 | Kupplungsbetätigungspunkt |
| 21 | Fahrzeugführer | 56 | angepasste Ventilsteuerkennlinie |
| 22 | Kupplungspedal | 57 | Stellmittel |
| 22',",^{X} | Kupplungspedalpositionen | | |
| 23 | Anfahrkupplung | | |
| 24 | 1. Getriebestufe | | |
| 25 | 2. Getriebestufe | | |
| 26 | Vorwärts-Rückwärtsfahrkupplung | | |
| 27 | Fahrbereichskupplung | | |
| 28 | Planetengetriebe | | |
| 29 | Planetensteg | | |
| 30 | Planetensatz | | |
| U | | | Spannungssignal |
| n_{ab} | | | Abtriebsdrehzahl |
| ϕ | | | Kupplungspedalweg |
| Δϕ | | | relativer Kupplungspedalweg |
| Δϕ^{X} | | | Kupplungspedalweg |
| F_{H} | | | Hangabtriebskraft |
| P1,P2 | | | Drucksignal |
| I | | | Stellsignal |
| F_{HH} | | | Hanghaltekraft |
| M_{HH} | | | Hanghaltemoment |
| M_{K} | | | Kupplungsmoment |

## Patentansprüche

1. Verfahren zur Einstellung eines Kupplungsmoments einer automatisierten Anfahrkupplung (2.3) eines Fahrzeuges, insbesondere eines landwirtschaftlichen Nutzfahrzeugs, welches zumindest einen Antriebsmotor (3) und ein mit diesem gekoppeltes, eine stufenlos änderbare Abtriebsdrehzahl bereitstellendes Getriebes (13) umfasst, wobei die Anfahrkupplung über die Auslenkung eines Kupplungspedals (22) aktiviert und das In-Bewegung-Setzen des Fahrzeugs durch Überwinden eines Hanghaltemoments der Anfahrkupplung bewirkt wird,
**dadurch gekennzeichnet,**
**dass** das Überwinden unterschiedlicher Hanghaltemomente (M_{HH}) der Anfahrkupplung (23) stets bei annährend gleicher Stellung (Δϕ^{x}, 22^{x}) des Kupplungspedals (22) erfolgt.

2. Verfahren zur Einstellung eines Kupplungsmoments einer automatisierten Anfahrkupplung eines Fahrzeuges nach Anspruch 1,
**dadurch gekennzeichnet,**
**dass** die annährend gleiche Stellung (Δϕ^{x}, 22^{x}) des Kupplungspedals (22) in einem Bereich von bis zu 30 % des maximal möglichen Kupplungspedalwegs (ϕ) liegt.

3. Verfahren zur Einstellung eines Kupplungsmoments einer automatisierten Anfahrkupplung eines Fahrzeuges nach einem der vorhergehenden Ansprüche,
**dadurch gekennzeichnet,**
**dass** die annähernd gleiche Stellung (Δϕ^{x}, 22^{x}) des Kupplungspedals (22) bei 10 % des maximal möglichen Kupplungspedalweges (ϕ) liegt.

4. Verfahren zur Einstellung eines Kupplungsmoments einer automatisierten Anfahrkupplung eines Fahrzeuges nach einem der Ansprüche 1 bis 3,
**dadurch gekennzeichnet,**
**dass** Mittel (48, 49) vorgesehen sind, die die notwendige Hanghaltekraft (F_{HH}) des Fahrzeugs (1, 2) und/oder das aus der notwendigen Hanghaltekraft (F_{HH}) resultierende notwendige Hanghaltemoment (M_{HH}) sensieren und das zur notwendigen Hanghaltekraft (F_{HH}) korrespondierende notwendige Hanghaltemoment (M_{HH}) über Stellmittel (44, 50, 51) als maximales Kupplungsmoment (M_{K}) an der Anfahrkupplung (23) eingestellt wird.

5. Verfahren zur Einstellung eines Kupplungsmoments einer automatisierten Anfahrkupplung eines Fahrzeuges nach Anspruch 4,
**dadurch gekennzeichnet,**
**dass** dem Fahrzeug (1, 2) eine Steuer- und Regeleinrichtung (50) zugeordnet ist, die aus dem ermittelten notwendigen Hanghaltemoment (M_{HH}) Stellsignale (I) zur Definition eines maximalen Kupplungsmoments (M_{K}) der Anfahrkupplung (23) und dessen Koppelung an die Stellung (Δϕ^{x}, 22^{x}) des Kupplungspedals (22) generiert.

6. Verfahren zur Einstellung eines Kupplungsmoments einer automatisierten Anfahrkupplung eines Fahrzeuges nach Anspruch 5,
**dadurch gekennzeichnet,**
**dass** die Anfahrkupplung (23) als Hydraulikschaltung (37) ausgebildet ist und zumindest ein Druckbegrenzungsventil (44) und einem diesen zugeordnetes Steuerdruckventil (51) umfasst und wobei das Stellsignal (I) zur Definition eines maximalen Kupplungsmoments (M_{K}) in der Anfahrkupplung (23) als Hydraulikdruck (P1) definiert ist.

7. Verfahren zur Einstellung eines Kupplungsmoments einer automatisierten Anfahrkupplung eines Fahrzeuges nach Anspruch 6,
**dadurch gekennzeichnet,**
**dass** das eine stufenlos änderbare Abtriebsdrehzahl bereitstellende Getriebe (6, 13) zumindest einen Hydromodul (15) und wenigstens einen Mechanikmodul (16) umfasst und die Anfahrkupplung (23) dem Hydromodul (15) zugeordnet ist.

8. Verfahren zur Einstellung eines Kupplungsmoments einer automatisierten Anfahrkupplung eines Fahrzeuges nach Anspruch 7,
**dadurch gekennzeichnet,**
**dass** der Hydromodul (15) zumindest zwei in einem geschlossenen Hydraulikkreislauf (45) angeordnete Hydrostateinheiten (33, 34) umfasst, das Druckbegrenzungsventil (44) die pumpenseitigen und verbraucherseitigen Hydraulikzweige (46, 47) des Hydraulikkreislaufes (45) miteinander verbindet, das dem Druckbegrenzungsventil (44) zugeordnete Steuerdruckventil (51) mit der Steuer- und Regeleinrichtung (50) datenaustauschbar verbunden ist und jedem Hydraulikzweig (46, 47) ein mit der Steuer- und Regeleinrichtung (50) gekoppelter Drucksensor (48, 49) zugeordnet ist.

9. Verfahren zur Einstellung eines Kupplungsmoments einer automatisierten Anfahrkupplung eines Fahrzeuges nach einem der vorhergehenden Ansprüche,
**dadurch gekennzeichnet, dass**
der dem verbraucherseitigen Hydraulikzweig (46) zugeordnete Drucksensor (48) ein dem Hanghaltemoment (M_{HH}) proportionales Drucksignal (P2) generiert und an die Steuer- und Regeleinrichtung (50) übergibt,
das ein dem Kupplungspedal (22) zugeordneter Positionssensor (42) ein die Stellung des Kupplungspedals (22',",^{x}) definierendes Positionssignal (U) generiert und an die Steuer- und Regeleinrichtung (50) übergibt,
das die Steuer- und Regeleinrichtung (50) das dem Hanghaltemoment (M_{HH}) proportionale Drucksignal (P2) und das Positionssignal (U) miteinander verknüpft
und ein von der Steuer- und Regeleinrichtung (50) generiertes Steuersignal (I)
die Ansteuerung des dem Druckbegrenzungsventil (44) zugeordneten Steuerdruckventils (51) und damit die Änderung des Kupplungsmoments (M_{K}) bewirkt.

10. Verfahren zur Einstellung eines Kupplungsmoments einer automatisierten Anfahrkupplung eines Fahrzeuges nach Anspruch 9,
**dadurch gekennzeichnet,**
**dass**
die Steuer- und Regeleinrichtung (50) ein dem Fahrzeug (1, 2) zugeordnetes Fahrzeugsteuergerät (18) und/oder ein dem die stufenlos änderbare Abtriebsdrehzahlen bereitstellenden Getriebe (6, 13) zugeordnetes Getriebesteuergerät (17) umfasst.

11. Verfahren zur Einstellung eines Kupplungsmoments einer automatisierten Anfahrkupplung eines Fahrzeuges nach Anspruch 9,
**dadurch gekennzeichnet,**
**dass**
der Positionssensor als Drehpotentiometer (42) ausgeführt ist.

12. Verfahren zur Einstellung eines Kupplungsmoments einer automatisierten Anfahrkupplung eines Fahrzeuges nach Anspruch 9,
**dadurch gekennzeichnet,**
**dass** die Ansteuerung des dem Druckbegrenzungsventil (44) zugeordneten Steuerdruckventils (51) durch Betätigung des Kupplungspedals (22) eine Absenkung des Kupplungsmoments (M_{K}) in der Weise bewirkt, dass unabhängig vom maximalen Haltemoment (M_{HH}) das In-Bewegung-Setzen des Fahrzeug (1, 2) stets bei nahezu gleicher Stellung (Δϕ^{x}, 22^{x}) des Kupplungspedals (22) erfolgt.

13. Verfahren zur Einstellung eines Kupplungsmoments einer automatisierten Anfahrkupplung eines Fahrzeuges nach einem der vorhergehenden Ansprüche,
**dadurch gekennzeichnet,**
**dass** in der Steuer- und Regeleinrichtung (50) zumindest eine Ventilsteuerkennlinie (52) hinterlegt ist, die den Druck (P1) im pumpenseitigen Hydraulikzweig (47) des Hydromoduls (15) in Abhängigkeit von der Stellung (Δϕ^{x}, 22^{x}) des Kupplungspedals (22) in der Weise steuert, dass die zumindest eine hinterlegte Ventilsteuerkennlinie (52) in Abhängigkeit von dem, dem Hanghaltemoment (M_{HH}) proportionalen Druck (P2) im verbraucherseitigen Hydraulikzweig (46) des Hydromoduls (15) in eine angepasste Ventilsteuerkennlinie (56) überführt wird, die sich durch Verschiebung der hinterlegten zumindest einen Ventilsteuerkennlinien (52) in Richtung des ermittelten Drucks (P2) im verbraucherseitigen Hydraulikzweig (46) ergibt.

14. Verfahren zur Einstellung eines Kupplungsmoments einer automatisierten Anfahrkupplung eines Fahrzeuges nach einem der vorhergehenden Ansprüche,
**dadurch gekennzeichnet,**
**dass** das In-Bewegung-Setzen des Fahrzeugs (1, 2) mit nahezu konstanter Beschleunigung erfolgt indem das Hanghaltemoment (M_{HH}) ermittelt wird und bei kleinem Hanghaltemoment (M_{HH}) ein schnelles Öffnen des Druckbegrenzungsventils (44) und bei großem Hanghaltemoment (M_{HH}) ein langsames Öffnen des Druckbegrenzungsventils (44) vorgenommen wird.

15. Verfahren zur Einstellung eines Kupplungsmoments einer automatisierten Anfahrkupplung eines Fahrzeuges nach einem der vorhergehenden Ansprüche,
**dadurch gekennzeichnet,**
**dass** das eine stufenlos änderbare Abtriebsdrehzahl bereitstellende Getriebe (6, 13) als elektro-mechanisch leistungsverzweigtes Getriebe ausgebildet ist und die Anfahrkupplung (23) als elektrische Schaltung ausgebildet ist, deren das Drehmoment des oder der Elektromotoren bestimmenden Parameter zur Steuerung der Anfahrkupplung (23) änderbar sind.

## Claims

1. A method of adjusting a clutch torque of an automated starting clutch (23) of a vehicle, in particular an agricultural utility vehicle, which includes at least one drive engine (3) and a transmission (13) coupled thereto and providing a steplessly variable output drive speed, wherein the starting clutch is activated by way of the deflection of a clutch pedal (22) and the vehicle is caused to be set in movement by overcoming a slope holding moment of the starting clutch,
**characterised in that** overcoming different slope holding moments (M_{HH}) of the starting clutch (23) is always effected at approximately the same position (Δϕ^{x},22^{x}) of the clutch pedal (22).

2. A method of adjusting a clutch torque of an automated starting clutch of a vehicle according to claim 1 **characterised in that** the approximately same position (Δϕ^{x},22^{x}) of the clutch pedal (22) is in a range of up to 30% of the maximum possible clutch pedal travel (ϕ).

3. A method of adjusting a clutch torque of an automated starting clutch of a vehicle according to one of the preceding claims **characterised in that** the approximately same position (Δϕ^{x},22^{x}) of the clutch pedal (22) is at 10% of the maximum possible clutch pedal travel (ϕ).

4. A method of adjusting a clutch torque of an automated starting clutch of a vehicle according to one of claims 1 to 3 **characterised in that** there are provided means (48, 49) which sense the necessary slope holding force (F_{HH}) of the vehicle (1, 2) and/or the necessary slope holding moment (M_{HH}) resulting from the necessary slope holding force (F_{HH}) and the necessary slope holding moment (M_{HH}) corresponding to the necessary slope holding force (F_{HH}) is adjusted by way of adjusting means (44, 50, 51) as the maximum clutch torque (M_{K}) at the starting clutch (23).

5. A method of adjusting a clutch torque of an automated starting clutch of a vehicle according to claim 4 **characterised in that** associated with the vehicle (1, 2) is an open-loop and closed-loop control device (50) which from the ascertained necessary slope holding moment (M_{HH}) generates adjusting signals (I) for the definition of a maximum clutch torque (M_{K}) of the starting clutch (23) and coupling thereof to the position (Δϕ^{x},22^{x}) of the clutch pedal (22).

6. A method of adjusting a clutch torque of an automated starting clutch of a vehicle according to claim 5 **characterised in that** the starting clutch (23) is in the form of a hydraulic circuit (37) and includes at least one pressure limiting valve (44) and a control pressure valve (51) associated therewith and wherein the adjusting signal (I) for the definition of a maximum clutch torque (M_{K}) in the starting clutch (23) is defined as hydraulic pressure (P1).

7. A method of adjusting a clutch torque of an automated starting clutch of a vehicle according to claim 6 **characterised in that** the transmission (6, 13) for providing a steplessly variable output drive speed includes at least one hydraulic module (15) and at least one mechanical module (16) and the starting clutch (23) is associated with the hydraulic module (15).

8. A method of adjusting a clutch torque of an automated starting clutch of a vehicle according to claim 7 **characterised in that** the hydraulic module (15) includes at least two hydrostatic units (33, 34) arranged in a closed hydraulic circuit (45), the pressure limiting valve (44) interconnects the pump-side and consumer-side hydraulic paths (46, 47) of the hydraulic circuit (45), the pressure control valve (51) associated with the pressure limiting valve (44) is connected to the open-loop and closed-loop control device (50) in data-exchange relationship and associated with each hydraulic path (46, 47) is a pressure sensor (48, 49) coupled to the open-loop and closed-loop control device (50).

9. A method of adjusting a clutch torque of an automated starting clutch of a vehicle according to one of the preceding claims **characterised in that**
the pressure sensor (48) associated with the consumer-side hydraulic path (46) generates a pressure signal (P2) proportional to the slope holding moment (M_{HH}) and passes it to the open-loop and closed-loop control device (50),
the position sensor (42) associated with the clutch pedal (22) generates a position signal (U) defining the position of the clutch pedal (22',",^{x}) and passes it to the open-loop and closed-loop control device (50),
the open-loop and closed-loop control device (50) links together the pressure signal (P2) proportional to the slope holding moment (M_{HH}) and the position signal (U) and
a control signal (I) generated by the open-loop and closed-loop control device (50) causes actuation of the control pressure valve (51) associated with the pressure limiting valve (44) and therewith the change in the clutch torque (M_{K}).

10. A method of adjusting a clutch torque of an automated starting clutch of a vehicle according to claim 9 **characterised in that** the open-loop and closed-loop control device (50) includes a vehicle control device (18) associated with the vehicle (1, 2) and/or a transmission control device (17) associated with the transmission (6, 13) providing the steplessly variable output drive speed.

11. A method of adjusting a clutch torque of an automated starting clutch of a vehicle according to claim 9 **characterised in that** the position sensor is in the form of a rotary potentiometer (42).

12. A method of adjusting a clutch torque of an automated starting clutch of a vehicle according to claim 9 **characterised in that** actuation of the control pressure valve (51) associated with the pressure limiting valve (44) by actuation of the clutch pedal (22) causes a drop in the clutch torque (M_{K}) in such a way that independently of the maximum holding moment (M_{HH}) the vehicle (1, 2) is set in movement always at approximately the same position (Δϕ^{x},22^{x}) of the clutch pedal (22).

13. A method of adjusting a clutch torque of an automated starting clutch of a vehicle according to one of the preceding claims **characterised in that** stored in the open-loop and closed-loop control device (50) is at least one valve control characteristic (52) which controls the pressure (P1) in the pump-side hydraulic path (47) of the hydraulic module (15) in dependence on the position (Δϕ^{x},22^{x}) of the clutch pedal (22) in such a way that the at least one stored valve control characteristic (52) in dependence on the pressure (P2) proportional to the slope holding moment (M_{HH}) in the consumer-side hydraulic path (46) of the hydraulic module (15) is converted into an adapted valve control characteristic (56) which is afforded by displacement of the stored at least one valve control characteristic (52) in the direction of the ascertained pressure (P2) in the consumer-side hydraulic path (46).

14. A method of adjusting a clutch torque of an automated starting clutch of a vehicle according to one of the preceding claims **characterised in that** the vehicle (1, 2) is set in movement with an almost constant acceleration **in that** the slope holding moment (M_{HH}) is ascertained and with a low slope holding moment (M_{HH}) rapid opening of the pressure limiting valve (44) is effected and with a high slope holding moment (M_{HH}) slow opening of the pressure limiting valve (44) is effected.

15. A method of adjusting a clutch torque of an automated starting clutch of a vehicle according to one of the preceding claims **characterised in that** the transmission (6, 13) providing a steplessly variable output drive speed is in the form of an electro-mechanically power-split transmission and the starting clutch (23) is in the form of an electrical circuit whose parameters which determine the torque of the electric motor or motors are variable for controlling the starting clutch (23).

## Revendications

1. Procédé de réglage d'un moment d'embrayage d'un embrayage de démarrage automatisé (23) d'un véhicule, en particulier d'un véhicule utilitaire agricole qui comprend au moins un moteur d'entraînement (3) et, couplée à celui-ci, une transmission (13) fournissant un régime de sortie variable en continu, l'embrayage de démarrage étant activé par l'intermédiaire du débattement d'une pédale d'embrayage (22) et la mise en mouvement du véhicule étant réalisée par le surmontement d'un moment de maintien en pente de l'embrayage de démarrage, **caractérisé en ce que** le surmontement de moments de maintien en pente (M_{HH}) différents de l'embrayage de démarrage (23) s'effectue toujours dans une position approximativement identique (Δϕ^{x}, 22^{x}) de la pédale d'embrayage (22).

2. Procédé de réglage d'un moment d'embrayage d'un embrayage de démarrage automatisé d'un véhicule selon la revendication 1, **caractérisé en ce que** la position approximativement identique (Δϕ^{x}, 22^{x}) de la pédale d'embrayage (22) se situe dans une plage pouvant atteindre 30 % de la course de pédale d'embrayage maximale possible (ϕ).

3. Procédé de réglage d'un moment d'embrayage d'un embrayage de démarrage automatisé d'un véhicule selon une des revendications précédentes, **caractérisé en ce que** la position approximativement identique (Δϕ^{x}, 22^{x}) de la pédale d'embrayage (22) se situe à 10 % de la course de pédale d'embrayage maximale possible (ϕ).

4. Procédé de réglage d'un moment d'embrayage d'un embrayage de démarrage automatisé d'un véhicule selon une des revendications 1 à 3, **caractérisé en ce qu'**il est prévu des moyens (48, 49) qui captent la force de maintien en pente nécessaire (F_{HH}) du véhicule (1, 2) et/ou le moment de maintien en pente (M_{HH}) nécessaire résultant de la force de maintien en pente nécessaire (F_{HH}), et le moment de maintien en pente (M_{HH}) nécessaire correspondant à la force de maintien en pente nécessaire (F_{HH}) est réglé au niveau de l'embrayage de démarrage (23) en tant que moment d'embrayage maximal (M_{K}) par l'intermédiaire de moyens (44, 50, 51).

5. Procédé de réglage d'un moment d'embrayage d'un embrayage de démarrage automatisé d'un véhicule selon la revendication 4, **caractérisé en ce qu'**au véhicule (1, 2) est associé un dispositif de commande et de réglage (50) qui, à partir du moment de maintien en pente (M_{HH}) nécessaire obtenu, génère des signaux de commande (I) pour définir un moment d'embrayage maximal (M_{K}) de l'embrayage de démarrage (23) et de son couplage sur la position (Δϕ^{x}, 22^{x}) de la pédale d'embrayage (22).

6. Procédé de réglage d'un moment d'embrayage d'un embrayage de démarrage automatisé d'un véhicule selon la revendication 5, **caractérisé en ce que** l'embrayage de démarrage (23) est conformé en embrayage hydraulique (37) et comprend au moins une valve de limitation de pression (44) et une valve de pression de commande (51), et le signal de positionnement (I) destiné à définir un moment d'embrayage maximal (M_{K}) dans l'embrayage de démarrage (23) étant défini en tant que pression hydraulique (P1).

7. Procédé de réglage d'un moment d'embrayage d'un embrayage de démarrage automatisé d'un véhicule selon la revendication 6, **caractérisé en ce que** la transmission (6, 13) fournissant un régime de sortie variable en continu comprend au moins un module hydraulique (15) et au moins un module mécanique (16), et l'embrayage de démarrage (23) est associé au module hydraulique (15).

8. Procédé de réglage d'un moment d'embrayage d'un embrayage de démarrage automatisé d'un véhicule selon la revendication 7, **caractérisé en ce que** le module hydraulique (15) comprend au moins deux unités hydrostatiques (33, 34) disposées dans un circuit hydraulique fermé (45), la valve de limitation de pression (44) relie entre elles les branches hydrauliques côté pompe et côté organe utilisateur (46, 47) du circuit hydraulique (45), la valve de pression de commande (51) associée à la valve de limitation de pression (44) est reliée avec possibilité d'échange de données au dispositif de commande et de réglage (50) et à chaque branche hydraulique (46, 47) est associé un capteur de pression (48, 49) couplé au dispositif de commande et de réglage (50).

9. Procédé de réglage d'un moment d'embrayage d'un embrayage de démarrage automatisé d'un véhicule selon une des revendications précédentes, **caractérisé en ce que** le capteur de pression (48) associé à la branche hydraulique côté organe utilisateur (46) génère un signal de pression (P2) proportionnel au moment de maintien en pente (M_{HH}) et le transmet au dispositif de commande et de réglage (50), le capteur de position (42) associé à la pédale d'embrayage (22) génère un signal de position (U) définissant la position de la pédale d'embrayage (22',",^{x}) et le transmet au dispositif de commande et de réglage (50), le dispositif de commande et de réglage (50) relie entre eux le signal de pression (P2) proportionnel au moment de maintien en pente (M_{HH}) et le signal de position (U), et un signal de commande (I) généré par le dispositif de commande et de réglage (50) provoque la commande de la valve de pression de commande (51) associée à la valve de limitation de pression (44) et donc la modification du moment d'embrayage (M_{K}).

10. Procédé de réglage d'un moment d'embrayage d'un embrayage de démarrage automatisé d'un véhicule selon la revendication 9, **caractérisé en ce que** le dispositif de commande et de réglage (50) comprend un appareil de commande de véhicule (18) associé au véhicule (1, 2) et/ou un appareil de commande de transmission (17) associé à la transmission (6, 13) fournissant le régime de sortie variable en continu.

11. Procédé de réglage d'un moment d'embrayage d'un embrayage de démarrage automatisé d'un véhicule selon la revendication 9, **caractérisé en ce que** le capteur de position est conformé en potentiomètre rotatif (42).

12. Procédé de réglage d'un moment d'embrayage d'un embrayage de démarrage automatisé d'un véhicule selon la revendication 9, **caractérisé en ce que**, lors de l'actionnement de la pédale d'embrayage (22), la commande de la valve de pression de commande (51) associée à la valve de limitation de pression (44) provoque une baisse du moment d'embrayage (M_{K}), de sorte que, indépendamment du moment de maintien maximal (M_{HH}), la mise en mouvement du véhicule (1, 2) s'effectue toujours avec une position quasiment identique (Δϕ^{x}, 22^{x}) de la pédale d'embrayage (22).

13. Procédé de réglage d'un moment d'embrayage d'un embrayage de démarrage automatisé d'un véhicule selon une des revendications précédentes, **caractérisé en ce que** dans le dispositif de commande et de réglage (50) est enregistrée au moins une courbe caractéristique de commande de soupape (52) qui commande la pression (P1) dans la branche hydraulique côté pompe (47) du module hydraulique (15) en fonction de la position (Δϕ^{x}, 22^{x}) de la pédale d'embrayage (22), de façon que la au moins une courbe caractéristique de commande de soupape enregistrée (52) soit convertie, en fonction de la pression (P2) proportionnelle au moment de maintien en pente (M_{HH}) dans la branche hydraulique côté organe utilisateur (46) du module hydraulique (15), en une courbe caractéristique de commande de soupape adaptée (56) qui est obtenue en décalant la au moins une courbe caractéristique de commande de soupape enregistrée (52) en direction de la pression détectée (P2) dans la branche hydraulique côté organe utilisateur (46).

14. Procédé de réglage d'un moment d'embrayage d'un embrayage de démarrage automatisé d'un véhicule selon une des revendications précédentes, **caractérisé en ce que** la mise en mouvement du véhicule (1, 2) s'effectue avec une accélération sensiblement constante étant donné que le moment de maintien en pente (M_{HH}) est détecté et que l'ouverture effectuée de la valve de limitation de pression (44) est rapide en présence d'un moment de maintien en pente (M_{HH}) bas et lente en présence d'un moment de maintien en pente (M_{HH}) élevé.

15. Procédé de réglage d'un moment d'embrayage d'un embrayage de démarrage automatisé d'un véhicule selon une des revendications précédentes, **caractérisé en ce que** la transmission (6, 13) fournissant un régime de sortie variable en continu est conformée en transmission à puissance fractionnée électromécaniquement et l'embrayage de démarrage (23) est conformé en circuit électrique dont les paramètres déterminant le moment de rotation du ou des moteurs électriques sont variables pour commander l'embrayage de démarrage (23).
